# EUROPEAN PATENT SPECIFICATION

(11) **EP 1 561 322 B1**
(45) Date of publication and mention of the grant of the patent: **23.12.2009**
(21) Application number: 03811398.1
(22) Date of filing: 04.11.2003
(51) Int. Cl.: H04L 29/02

(54) **METHOD AND APPARATUS FOR TRANSMITTING DATA SUBJECT TO PRIVACY RESTRICTIONS**
VERFAHREN UND VORRICHTUNG ZUM ÜBERTRAGEN VON VERTRAULICHKEITSEINSCHRÄNKUNGEN UNTERZOGENEN DATEN
PROCEDE ET APPAREIL DE TRANSMISSION DE DONNEES SOUMISES A DES RESTRICTIONS DE CONFIDENTIALITE

(30) Priority: 15.11.2002 US 427144 P; 27.08.2003 US 648644
(43) Date of publication of application: 10.08.2005
(73) Proprietor: Nokia Corporation, 02150 Espoo (FI)
(72) Inventor: AARTS, Robert, FIN-02130 Espoo (FI); BJORKSTEN, Margareta, FIN-00130 Helsinki (FI); SKYTTA, Timo, FIN-05840 Hyvinkää (FI)
(74) Representative: Ruuskanen, Juha-Pekka
(86) International application number: PCT/FI2003/000815
(87) International publication number: WO 2004/047398

(56) References cited:
- EP-A1- 1 307 019
- WO-A1-02/054808
- US-A1- 2002 032 772

## Description

### BACKGROUND OF THE INVENTION:

### Field of the invention:

The invention relates to data storage and retrieval, and more specifically to granting permissions to operate on data on machines separate from an originating storage. In particular, the invention relates to data transfers between a service provider and a user or to peer-to-peer data transfer, where a user communicates with another user, wherein one of the users acts as a "service provider."

### Description of the related art:

Users may be provided with various types of services via a communication system. The communication system can be seen as a facility that enables communication between two or more entities such as user equipment and/or networks entities or other nodes associated with the communication system. The communication may include, for example, communication of various kinds of data such as voice data, electronic mail (email), text messages, content data, multimedia and so on.

A party of a communication may require privacy or other security features. For example, personal information may be suppressed entirely or partly from another party of the communication. The party requiring the privacy may typically be a user or a consumer of a service provided by a service provider (SP). A service provider may be an entity that is connected to one or more communication systems, for example, the Internet or other data network. The service provider may also be implemented as a part of a communication system. The service provider may also be another user acting as a service provider. Other parties may include, but are not limited to, the intended destination of a message, such as the service provider, or an intermediary handling this message.

Service providers in the Internet may have privacy policies that are posted on their web sites and which provide some protection. All service providers do not have privacy policies. Even if a service provider has a privacy policy, it can change the policy after the user has released data to the service provider. The user has no easy way of comparing service providers' privacy policies. Furthermore, the user has no way to prove under which policy he has provided data to a service provider.

Privacy policies may be based on any appropriate protocol, such as the Platform for Privacy Preferences (P3P) protocol. P3P enables Web sites to express their privacy policies in a standardized format that can be downloaded and read by web browsers and other end-user software tools. These end-user software tools can display information about site's privacy policy to users and take actions based on a user's preferences. Such end-user software tools might provide positive feedback to users when the sites they visit have privacy policies matching their preferences, and provide warnings when a mismatch occurs. The end-user tools may also notify users when a site's privacy policy changes.

EP 1,307,019 A1 describes a method for control of access of personal information in accordance with a privacy policy defined for a service provider. The method comprises the steps of providing service provider request data from a service provider to an end user device, the service provider request data being indicative of personal information of a user of the end user device to be accessed by the service provider, providing to the service provider first user data including at least one of personal information of the user as requested by the service provider or rejections of personal information requested by the service provider, creating privacy receipt data including the first user data and data being indicative of the service provider, and providing the privacy receipt data to the end user device.

WO 02/054808A1 discloses a method of invoking privacy related to a user equipment capable of accepting push messages in communications network, which push message is a message a server may send to the user equipment without the user of the user equipment asking for it and the server having the ability to be able to act as a push message initiator. The method comprises the steps of sending a first request for the personal user data from the user equipment to an origin server over a first channel; the origin server sending a request for personal user data to a supporting server; the supporting server sending a push message over a narrow band channel to the user equipment indicating said request for the user data made by the origin server; the user equipment responding to the push message at least by an allowing message or a disallowing message for the request of data over said narrow band channel; and the supporting server providing the data to the origin server at least partly in response to the allowing message, and rejecting the data providing otherwise.

US 2002/0032772A1 discloses a method for providing searching and alerting capabilities in traffic content at access points in data networks.

In the known solutions, it is hard to check and find a privacy policy matching since virtually every service provider has its own privacy policy. As every service provider has a different privacy policy, it is very difficult for the user to get an overview of different service provider's privacy policies and to compare them.

There is also a need for an improved system for testing the privacy policy matching or otherwise testing that the privacy levels are acceptable for the parties involved or for other such functions. Furthermore, certain applications may require a system enabling the use of different privacy policies with different service providers. It might also be advantageous in certain applications to be able to track later the policy under which the data of the user was released to a certain service provider at a certain moment. In certain embodiments, it might be advantageous to attach a reference to the agreed upon privacy policy to the data that is released.

### SUMMARY OF THE INVENTION:

According to an embodiment of the invention, there is provided a method for controlling transfer of data between a provider and a user in a communication system where the provider possesses a privacy policy. The method includes the steps of introducing to a broker a usage policy for the constraints related to the data of the user, receiving a request for data associated with the user from the service provider to the broker, checking in the broker the request against the usage policy of the user, and deciding if the data can be released, wherein the request includes information relating to the privacy policy of service provider and the request is checked against the usage policy of the user by including the step of correlating the privacy policy information with the usage policy.

In another embodiment, the usage policy for the constraints related to the data of the user is preferably defined by the user. The user may define a strictness level for his usage policy describing constraints related, for example, to the constraints related to the data of the user, such as purpose of use, retention and so on. The user may define the usage policy by means of a predefined set of policies. For this, standardized privacy policies or privacy contracts known by both the service provider and the user may be used. Thus the usage policy of the user is preferably defined by the same elements than the privacy policy of the service provider. The user may also define an acceptable usage policy in a general manner to be respected in relation to any service provider. Such a general acceptable usage policy may then be mapped to a predefined set of policies. A similar mapping mechanism may be carried out for the privacy policy of a service provider to find a common privacy policy. Alternatively, the user may define his usage policy in function of the service provider so that the data to be released may vary between each service provider or each type of service provider. In such a case, the data to be released may refer to an attribute, such as an address, or to a set of attributes, such as a name and an address. The broker may be configured to host the privacy policies and the usage policies. The broker may also carry out the mapping of the policies defined by the user and the service provider, when mapping is required. A negotiation mechanism may be used for the release of data. In certain embodiments, the privacy policies or usage policies may be attached to the released data.

In certain embodiments of the invention the user may easily compare the privacy policies of service providers since they use the same set of policies. In certain applications, the user may attach an electronically signed, legally binding usage policy, i.e. a privacy policy defined by the user, to the data of the user when the data is released to the service provider.

### BRIEF DESCRIPTION OF THE DRAWINGS:

The invention will now be described in further detail, by way of example only, with reference to the following examples and accompanying drawings, in which:
Figure 1 shows an example of an arrangement in which the invention may be implemented;
Figure 2a shows an example of a collection of attributes defining the strictness level 1, "Privacy Strict", of the privacy policy or usage policy in accordance with one embodiment of the invention;
Figure 2b shows an example of a collection of attributes defining the strictness level 2, "Privacy Cautious", of the privacy policy or usage policy in accordance with one embodiment of the invention;
Figure 2c shows an example of a collection of attributes defining the strictness level 3, "Privacy Neutral", of the privacy policy or usage policy in accordance with one embodiment of the invention;
Figure 2d shows an example of a collection of attributes defining the strictness level 4, "Privacy Flexible", of the privacy policy or usage policy in accordance with one embodiment of the invention;
Figure 2e shows an example of a collection of attributes defining the strictness level 5, "Privacy Casual", of the privacy policy or usage policy in accordance with one embodiment of the invention;
Figure 3 shows a binding profile describing access and policy of a personal profile of a user in accordance with one embodiment of the invention;
Figure 4 shows a flow chart of the method of the invention;
Figures 5a, 5b and 5c show message sequence charts describing ways of handling attribute request and checking of privacy policies and usage policies in accordance with certain preferred embodiments of the invention; and
Figure 6 shows a message sequence chart describing a way of handling attribute request and checking of privacy policies and usage policies in accordance with another embodiment of the invention.

### DETAILED DESCRIPTION OF THE PREFERRED EMBODIMENTS:

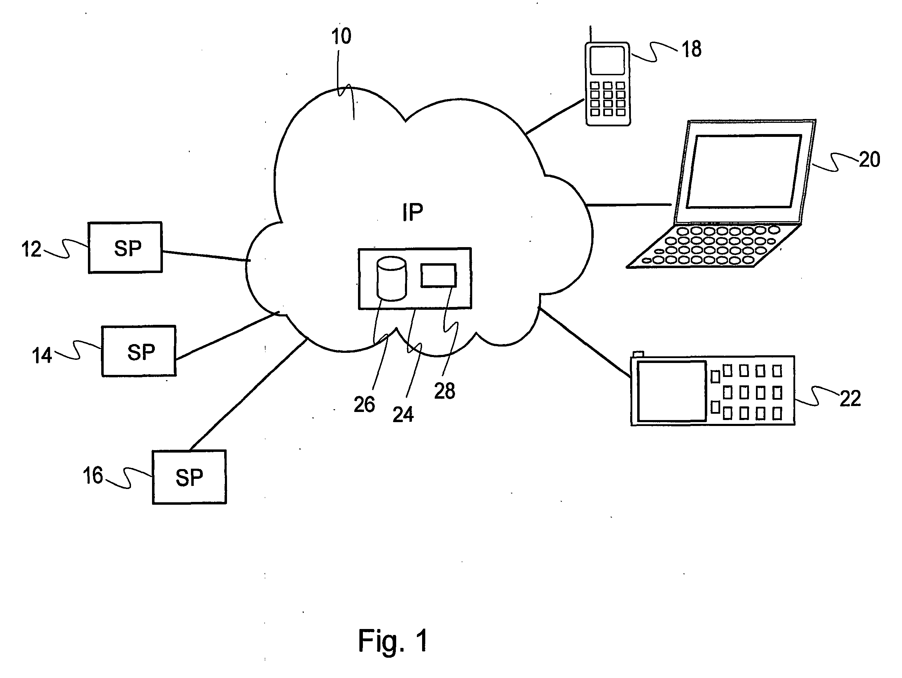

Figure 1 shows an example of an arrangement including a data communication network 10, a plurality of service providers (SP) 12, 14 and 16, and a plurality of end-users 18, 20 and 22. In connection with the invention, the term "service provider" typically means a system for providing services, such as sales, information distribution or any other form of service provisioning that may occur via a communication network. Service provider may also be another end-user. The service provider may also act in certain circumstances as a "Web Services Consumer." A set of service and identity providers having a business relationship may form a Circle of Trust (CoT).

The communication network 10 may be any appropriate data communication network. In one embodiment, the communication network is provided by the Internet. The terms "user", "end-user" and principal" refer to a subject, such as a person, a company, a system or a device, requiring a service provided by the service provider. It shall be appreciated that Figure 1 is only an example showing three service providers and end-users and that the number of these entities may differ substantially from that which is shown.

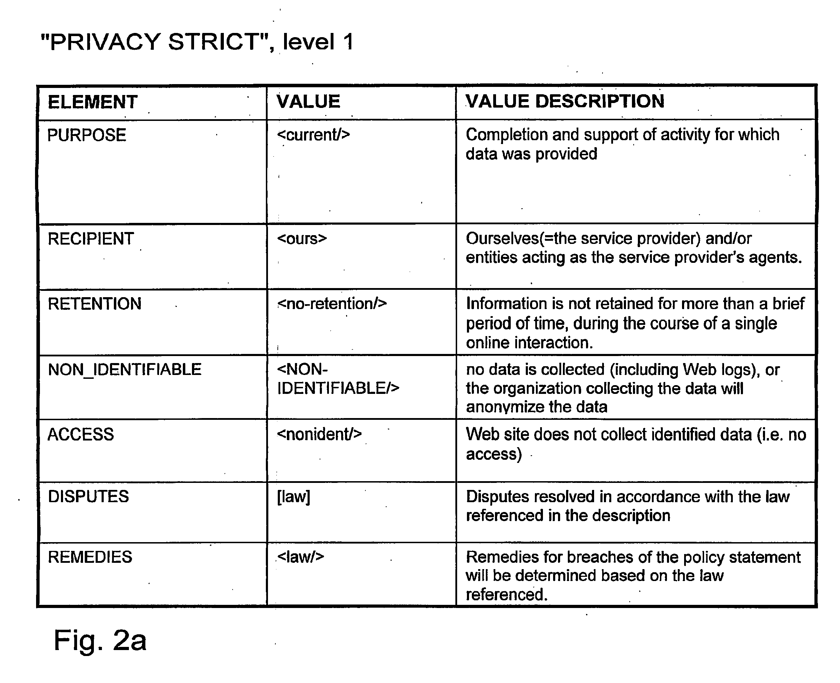

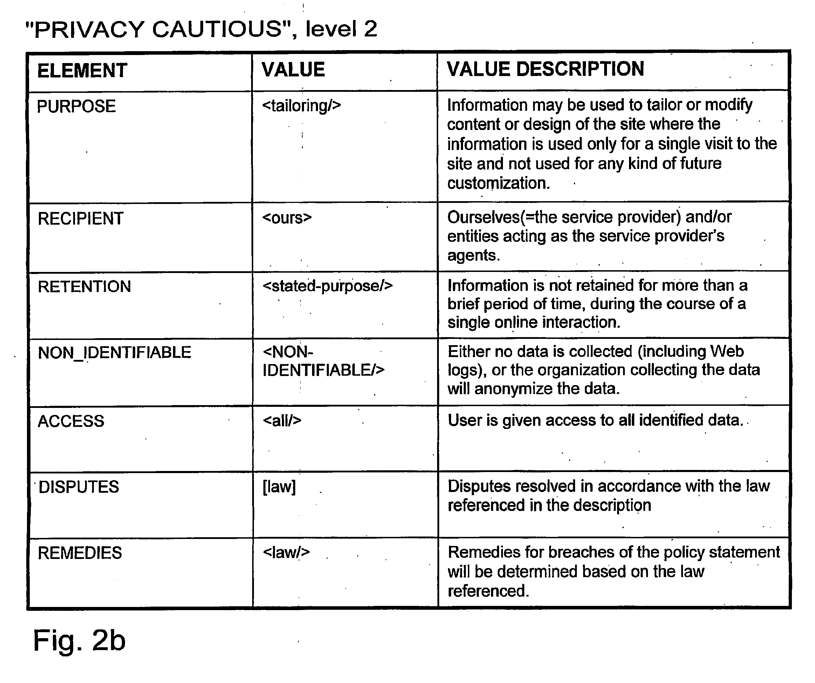

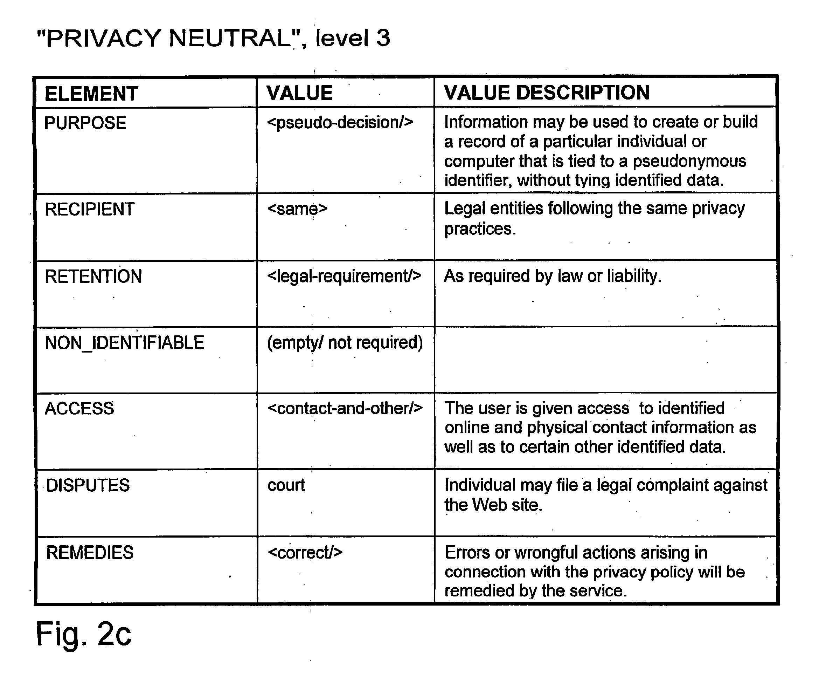

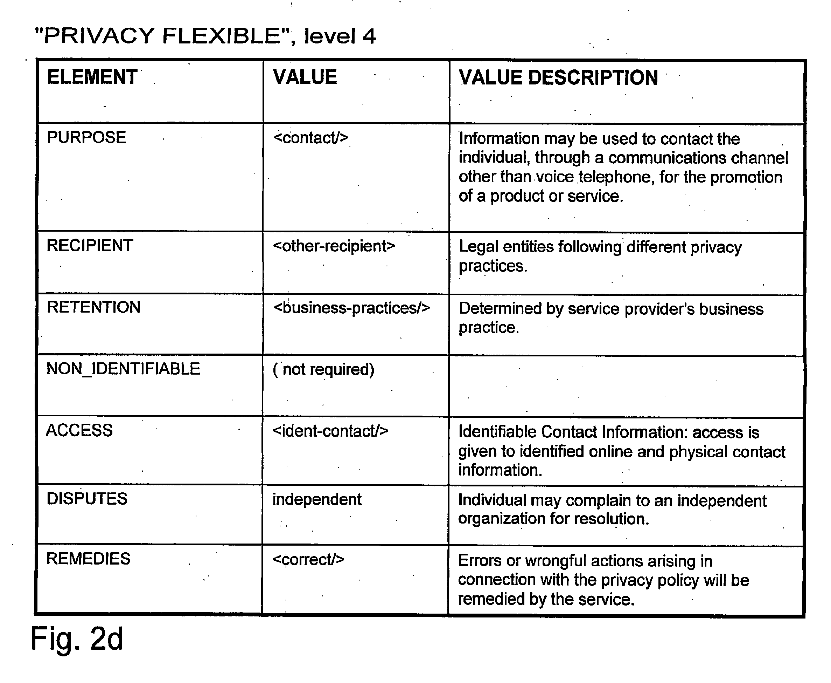

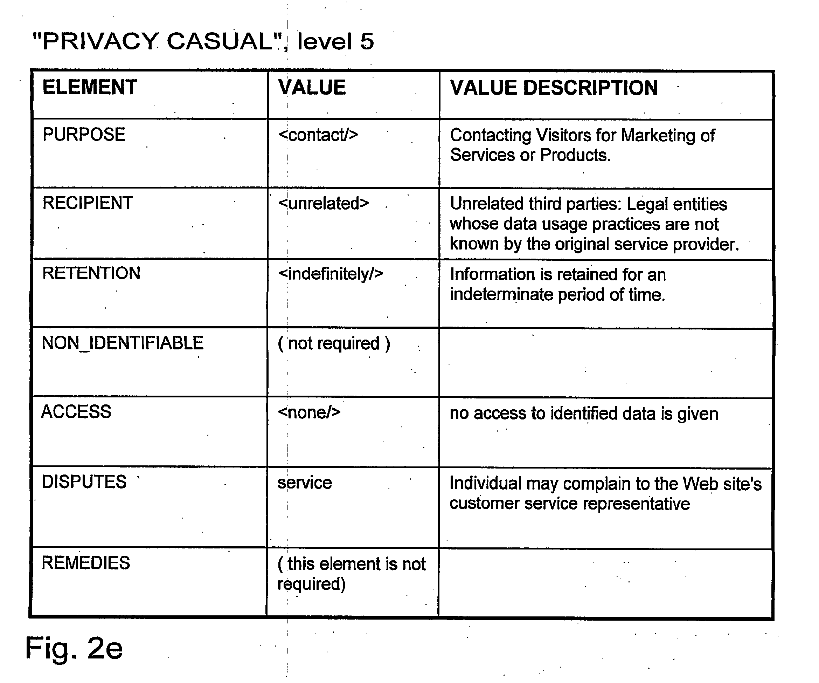

Figure 1 shows also a broker entity 24 configured for operation in accordance with the invention. The broker entity 24 is provided with appropriate devices for the provision of data storage and processing facilities 26 and 28, respectively. The operation of the exemplifying broker entity 24 will become clear from the description of the embodiments of Figures 2 to 6.

It is to be noted, that the term "broker" is used herein to describe any network entity or an entity associated with the user being capable to represent the user in the data transfer transaction. The broker may also be referred to as a Web Service Provider (WSP) capable of accomplishing the privacy control functions as described herein. The Web Services Provider provides services to the above-mentioned "Web Services Consumer." The broker may be located in the network or in the user terminal, for example.

The service provider or the Circle of Trust 12, 14, 16 preferably has a predefined set of privacy policies. These privacy policies may include information such as intended usage, retention, sharing and so on. Preferably, the privacy policies are sequenced according to strictness. The strictness may be an arbitrary metric assigned to a collection of privacy attributes such that higher levels of strictness are assigned values that are higher than lower levels of strictness. It is also possible in certain applications, that the privacy policy of the service provider is undefined.

A user or a principal 18, 20, 22 may define or choose constraints related to his data. The user may, for example, define one or more policies that are acceptable for the release of a specific attribute or class of attributes and for each service or category of services. The user may define to whom and according to what policy data may be released. Usage policies may also describe restrictions related to the use of attribute data. The user may define how the data can be used, with whom the data can be shared, for how long the data can be retained and so on. The data can be any attribute or set of attributes associated with the user, such as name, address, other contact information, profession, payment information, sicknesses, hobbies, preferences or any other data relating to the user.

The user may alternatively choose a default policy that applies for all categories. According to the invention, the privacy policy of the user may also be termed as a "usage policy." The usage policy may include similar information elements than the privacy policy of a service provider. In one embodiment, the user and the service provider use the same predefined set of policies including the same information elements and set of values.

For example, in an embodiment of the invention, the service provider 12, 14, 16 may ask for attributes related to a user 18, 20, 22. At the same time, the service provider preferably indicates its privacy policy. A broker 24 may then check the privacy policy of the service provider against the usage policy requirement defined by the user for the attributes in question. If the privacy policy of the service provider is equal or more restrictive than the usage policy defined by the user, the requested attribute data is released. If the privacy policy of the service provider is less restrictive than the usage policy, the user may be warned. The user may be asked if he wants to provide the requested data and continue the use of the service, or end the session.

An example of a possible set of different privacy or usage policies that reflect different degrees of strictness is given in figures 2a-e by defining five strictness levels, which may be ranked in order: level 1 - privacy strict (Fig. 2a), level 2 - privacy cautious (Fig. 2b), level 3 - privacy neutral (Fig. 2c), level 4 - privacy flexible (Fig. 2d), and level 5 - privacy casual (Fig. 2e).

Each privacy or usage policy may include for example following elements or attributes:
- "Purpose" describing the purposes of data collection or uses of data;
- "Recipient" describing the recipients of the collected data;
- "Retention" indicating the retention policy that applies to the data;
- "Non-identifiable" signifying that no data is collected or that all of the data referenced will be made anonymous upon collection;
- "Access" indicating whether the service provider provides access to the collected data;
- "Disputes" describing dispute resolution procedures that may be followed for disputes about a services' privacy practices; and
- "Remedies" specifying the possible remedies in case a policy breach occurs.

Typically the elements (e.g. purpose, recipient and so on) defining the privacy policy or the usage policy have an acceptable preset value or a set of acceptable preset values. Values of the elements in the level 1 "privacy strict" policy are typically very restrictive, whereas the values of the level 5 "privacy casual" may be very permissive. The privacy or usage policies may be arranged into an ordered set. The policies may be ordered, for example, according to the strictness level or according to any other appropriate criteria.

As mentioned above, in one embodiment, the user and the service provider may use the same set of policies including the same elements and set of values. In other words, the privacy policy and the usage policy preferably refer to similar set of policies. In another embodiment, the set of policies is arranged in an order as explained above. The term "privacy policy" is used in this description to denote a privacy policy defined by the service provider and term "usage policy" is used to denote a privacy policy defined by the user. In this embodiment the comparison of policies may be carried out directly without any preceding mapping of policies.

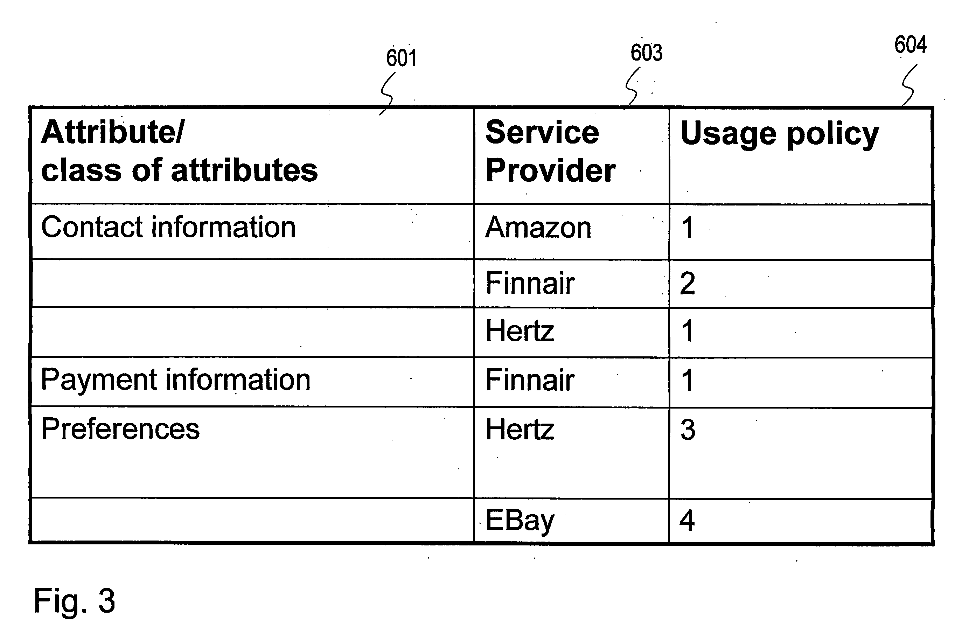

Figure 3 shows an example of a binding profile describing access and policy of personal profile of a user or a principal. The profile may be a database of fields that match an attribute or set of attributes 601 of the user to a service provider 603 and usage policy 604. The profile may be stored in the broker or may be accessible to the broker.

The arrangement of Figure 1 is used here as an example of a system where the invention may be implemented. A user 18, 20, 22 may contact a service provider 12, 14, 16 and request a service. Below, an-example is described with reference to a user 18 and a service provider 12. It should be noted, that this is not meant to limit by any means the number or nature of the user or the service provider.

In the arrangement of Figure 1, a broker 24 may collect information relating to the user privacy, such as user consent, access rules and usage policy. The broker 24 represents the user 18 in the transaction for transferring data between the service provider 12 and the user 18. The service provider 12 may then send to the broker 24 a request for data associated with the user 18. The service provider 12 typically needs this data to proceed with the request of the user 18.

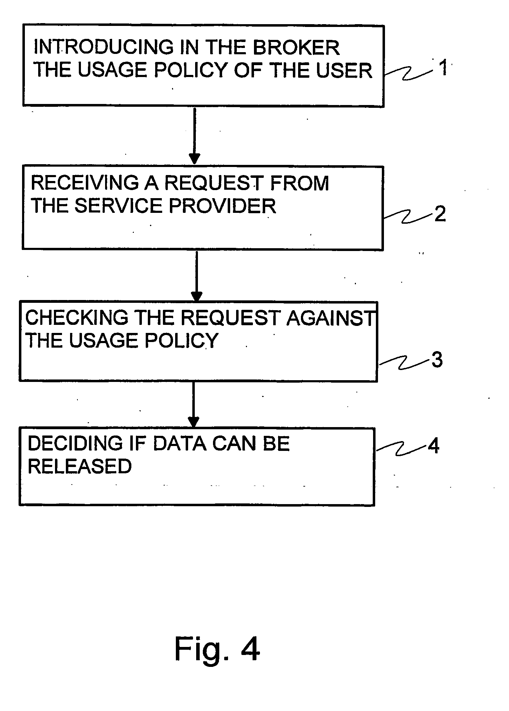

The above procedure is shown in a flow chart in Figure 4. The usage policy of the user is introduced in the broker (step 1). The broker receives a request for data associated with the user from the service provider (step 2). The broker checks the request against the usage policy of the user (step 3). Following the checking, it is decided if the requested data can be released (step 4).

In another embodiment, the request includes the following elements: an identifier of the user; at least one descriptor of the data sought by the service provider and an indicator of the privacy policy or privacy assurance in effect at the service provider for which the service provider makes an assurance that it will be applied to any data returned by the broker. Such a privacy assurance may have been pre-selected by the service provider from a range of privacy polices or privacy assurances.

The broker may make a check of the privacy policies or usage policies stored within itself or its domain or a place in the networks specified by a Uniform Resource Locator (URL) address. The broker may compare the indicator of the privacy policy of the service provider to the usage policy associated with data of the user that meets the description of the descriptor. The usage policy may have been previously associated with the data by earlier actions of the user. Such a check, or determining step, may be a comparison of a criterion such as policy strictness or a privacy attribute of a privacy policy of the service provider carried in the request.

The criterion is met for example if the privacy policy indicated in the request equals the usage policy of the user. In case the criterion is met, the broker may send at least one datum to the service provider. The at least one datum sent to the service provider is the counterpart to the descriptor included in the request. Such a response by the broker may satisfy the basic query for data that fits or otherwise is looked up based on the descriptor and the identifier of the user.

Failure of the request occurs when the broker makes a determination that a privacy assurance of the service provider is below a criteria previously established by the user associated with the data fitting the attributes of the request. In other words, failure of the request occurs when the privacy policy of the request does not equal or is less strict than the usage policy of the user stored in the broker. A response may include indication of an acceptable usage policy.

Alternatively, the broker may transmit a response bearing an error indicator or invoke an interaction service to check if the user wants to change his policy preference. It is thus indicated in the response that a privacy assurance is below or not equal to a criteria previously established by the user associated with the data fitting the attributes of the request.

In another embodiment, a service provider makes a request to the broker. The request may include an identifier of a user or a principal and at least one descriptor of the data sought by the service provider. The broker may make a check of the privacy policies or the usage policy of the user stored within itself or its domain or a place in the networks specified by a URL address, the check being associated with the at least one descriptor. The broker may then send a response including at least one datum corresponding to the query for data that is looked up based on the at least one descriptor. Additionally, the response typically includes the at least one usage policy that had been previously set by the user for that at least one datum.

The service provider may evaluate the usage policy according to the criteria in effect that moment at the privacy policies of the service provider. Such an evaluation may result in the service provider transmitting an error message. In addition to an error flag, such an error message may include an assurance that the data is being deleted or otherwise discarded.

The broker may transmit an error acknowledgement which may include messages, such as "error received" and "acknowledge receive discard data indication." Any other messages may also be included in the response depending on the situation. Configuration of these different messages is not limited to the examples given in this text.

The broker may also attach an electronically signed usage policy to the data of the user when the data is released to the service provider. The user may sign electronically his usage policy in any appropriate way.

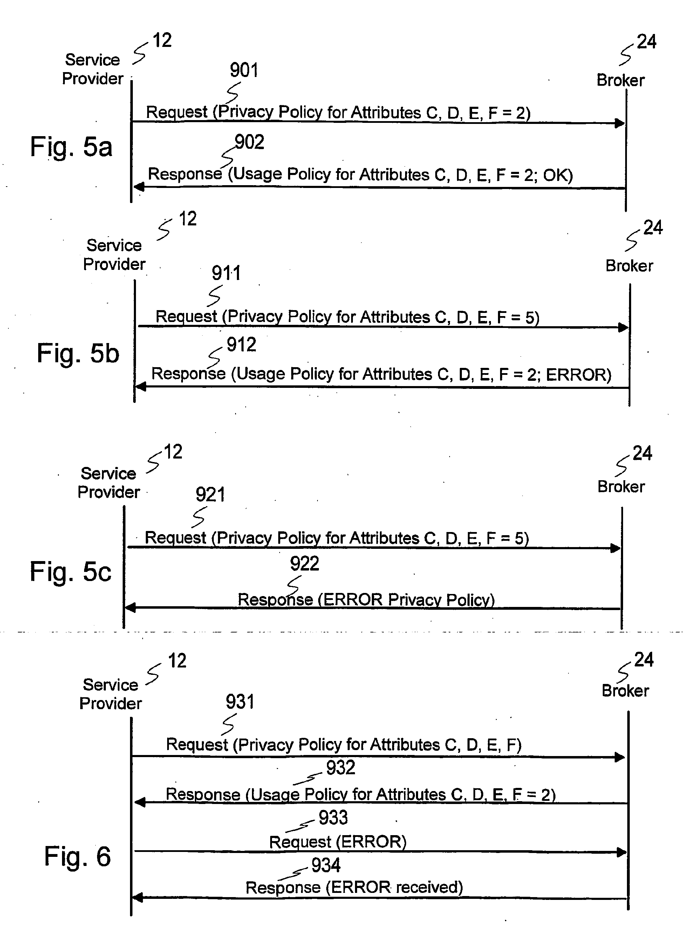

Figures 5a, 5b and 5c show signaling flows for some embodiments in accordance with the invention for attribute or data request and checking of privacy policies and usage policies. The privacy policy including for example intended usage set by the service provider 12 may be defined in the request 901, 911, 921. The usage policy required by the user is given in the response 902, 912, 922. In a successful case the privacy policy of the request 901, 911, 921 and the usage policy of the response 902, 912, 922 must match. This means that the usage policy of the user must define values for the attributes comprised in the request 901, 911, 921. In a successful case, the value defined by the user must be the same or less restrictive than the value required by the service provider.

In the example of Figure 5a, the service provider 12 may request for example the name and the address of the user with PrivacyPolicy_2 (privacy cautious). The user setting for the usage policy is, in this example, UsagePolicy_2. The broker 24 then discloses the user name and address using UsagePolicy_2.

In the example of Figure 5b, the service provider 12 may request for example the name and the address of the user with PrivacyPolicy_5 (privacy casual). The user setting for the usage policy is UsagePolicy_2 (privacy cautious). The broker 24 may disclose name and address using only UsagePolicy_2. The broker 24 may also indicate in the response that there was a mismatch between the privacy policy and the usage policy. Alternatively, the broker 24 may simply indicate that the required level of the privacy policy is not acceptable, as shown in the example of Figure 5c.

Figure 6 shows a situation, when the request 931 does not define the privacy policy level and thus indicates no intended usage. The usage policy is given in the response 932. In this embodiment, the service provider 12 must respect these directives. It is possible, however, that the service provider is not able to respect the level of the usage policy required by the user 18. In that case, the service provider may send to the broker 24 another request 933 including an indication that the required usage policy may not be respected. The broker 24 may, in its response 934, indicate a requirement for further action. Further action, for example, may be to discard the data.

In the embodiments shown in figures 5a-c and 6, the privacy policies and usage policies are as defined above. The service provider 12 sets or chooses among a well known set of policies the privacy policy and the user or principal 18 sets or chooses the usage policy as mentioned above. In accordance to the invention, the usage policy is stored in a broker 24. The broker 24 can decide to disclose attributes only when the usage policy is equal or less strict to the privacy policy the service provider indicated in the request. In case the usage policy is less strict, the broker 24 may disclose attributes using the usage policy equal to the privacy policy given in the request of the service provider. The broker 24 should not change the usage policy defined by the user to attribute association without asking for user consent.

In one embodiment, either the Circle of Trust (CoT) or Liberty has a web site where the five above defined policies are available online. Alternatively the policies can be located at an entity that provides a well known set of policies for a number of CoTs. The message may carry for example an indication, such as "CoTPrivacyUsagePolicyURL" or "LibertyV2.0PrivacyUsagePolicyURL".

Advantageously, several service providers or sets of service providers may use the same set of policies.

Although the invention has been described in the context of particular embodiments, various alternative embodiments are possible. For example, even if the communication network described in the examples above is mainly the Internet, the invention may be carried out in any other communication network. Examples of other networks may include, but are not limited to, other packet switched networks such as the third generation wireless network technologies like Wideband Code Division Multiple Access (WCDMA), CDMA2000, Universal Mobile Telecommunication System (UMTS) and Enhanced Data rates for GSM Evolution (EDGE). Networks may also include cellular networks such as the public switched telephone network.

In certain embodiments, it is also possible that the user carries out the function of the service provider and the service provider is functioning in place of the user. The terms service provider and user thus describe the function of the entity in question.

Thus, while the invention has been particularly shown and described with respect to specific embodiments thereof, it will be understood by those skilled in the art that changes in form and configuration may be made therein without departing from the scope of the invention as defined by the claims.

## Claims

1. A method for controlling transfer of data between a service provider system (12) and a user (18) in a communication system (10) where the service provider system (12) possesses a privacy policy, the method is **characterized in that**:
introducing (1) to a broker (24) a usage policy (604) for constraints related to data (601) of a user (18);
receiving (2) a request for data (601) associated with the user (18) from a service provider system (12) to the broker (24);
checking (3), in the broker (24), the request against the usage policy (604) of the user (18), and
deciding (4) if the data (601) can be released; the method further specifies that the request includes information related to the privacy policy and the step of checking the request against the usage policy (604) includes correlating the information related to the privacy policy with the usage policy (604).

2. A method according to claim 1, further comprising the step of using the user (18) to define the usage policy (604) for the constraints related to the data (601).

3. A method according to claim 1 or 2, further comprising the step of providing a predefined set of privacy policies and usage policies.

4. A method according to claim 3, wherein the providing step comprises providing the privacy policies and the usage policies comprising similar information elements.

5. A method according to claim 3, wherein the providing step comprises providing at least one of the privacy policies and at least one of the usage policies which specify a strictness level describing the constraints related to the data.

6. A method according to any of claims 3-5, further comprising the step of using the user (18) to choose the usage policies (604) for the constraints related to the data (601).

7. A method according to claim 5 or 6, further comprising the step of releasing user data (601) if the at least one of the privacy policies of the service provider system (12) matches with the specified strictness level of the at least one of the usage policies of the user (18).

8. A method according to any of claims 5-7, further comprising the step of indicating, by the broker (24), the strictness level of the at least one of the usage policies of the user (18) to the service provider system (12) if the at least one of the privacy policies of the service provider system (12) does not match with the specified strictness level of the at least one of the usage policies of the user (18).

9. A method according to any of claims 5-8, further comprising the step of allowing the user (18) to reduce a usage policy requirement if the at least one of the privacy policies of the service provider system (12) does not match with the specified strictness level of the at least one of the usage policies of the user.

10. A method according to any of preceding claims, further comprising the step of attaching an electronically signed usage policy to the data when the data is released.

11. A data transfer system comprising:
a service provider system (12) possessing a privacy policy; and
a broker (24) hosting a usage policy (604) for constraints related to data (601) of a user (18), configured for checking a request from the service provider system (12) against the usage policy (604) of the user (18) and for deciding if data (601) associated with the user (18) can be released in response to the request; the system comprises that the request includes information related to the privacy policy and the broker (24) is configured for checking the request against the usage policy (604) by correlating the information related to the privacy policy with the usage policy (604).

12. A data transfer system comprising:
introducing means for introducing to a broker (24) a usage policy (604) for constraints related to data (601) of a user (18);
receiving means for receiving a request for data associated with the user (18) from a service provider system (12) to the broker (24);
checking means for checking, in the broker (24), the request against a usage policy (604) of the user (18), and
deciding means for deciding if the data can be released; the system comprises that the request includes information related to a privacy policy of the service provider system (18) and the checking means checks the request against the usage policy (604) by correlating the information related to the privacy policy with the usage policy (604).

## Patentansprüche

1. Ein Verfahren zum Steuern einer Übertragung von Daten zwischen einem Dienstleistersystem (12) und einem Benutzer (18) in einem Kommunikationssystem (10), wobei das Dienstleistersystem (12) eine Datenschutzrichtlinie aufweist, wobei das Verfahren **gekennzeichnet ist durch**:
Bekanntmachen (1), bei einem Vermittler (24), einer Nutzungsrichtlinie (604) für Beschränkungen in Bezug auf Daten (601) eines Benutzers (18);
Empfangen (2) einer Anfrage nach Daten (601), die dem Benutzer (18) zugeordnet sind, von einem Dienstleistersystem (12) an den Vermittler (24);
Überprüfen (3), in dem Vermittler (24), der Anfrage mit/hinsichtlich der Nutzungsrichtlinie (604) des Benutzers (18); und
Entscheiden (4), ob die Daten (601) freigegeben werden können;
wobei das Verfahren ferner festlegt, dass die Anfrage Informationen bezüglich der Datenschutzrichtlinie einschließt und der Schritt von Überprüfen der Anfrage mit/hinsichtlich der Nutzungsrichtlinie (604) Korrelieren der Information bezüglich der Datenschutzrichtlinie mit der Nutzungsrichtlinie (604) einschließt.

2. Ein Verfahren gemäß Anspruch 1, das ferner den Schritt von sich des Benutzers (18) Bedienen umfasst, um die Nutzungsrichtlinie (604) für Beschränkungen in Bezug auf die Daten (601) festzulegen.

3. Ein Verfahren gemäß Anspruch 1 oder 2, das ferner den Schritt von Bereitstellen eines vorbestimmten Satzes von Datenschutzrichtlinien und Nutzungsrichtlinien umfasst.

4. Ein Verfahren gemäß Anspruch 3, wobei der Bereitstellungsschritt Bereitstellen der Datenschutzrichtlinien und der Nutzungsrichtlinien umfasst, die ähnliche Informationselemente umfassen.

5. Ein Verfahren gemäß Anspruch 3, wobei der Bereitstellungsschritt Bereitstellen mindestens einer der Datenschutzrichtlinien und mindestens einer der Nutzungsrichtlinien umfasst, die einen Striktheitsgrad festlegen, der die Beschränkungen in Bezug auf die Daten (601) beschreibt.

6. Ein Verfahren gemäß irgendeinem der Ansprüche 3 bis 5, das ferner den Schritt von sich des Benutzers (18) Bedienen umfasst, um die Nutzungsrichtlinien (604) für die Beschränkungen in Bezug auf die der Daten (601) zu wählen.

7. Ein Verfahren gemäß Anspruch 5 oder 6, das ferner den Schritt von Freigeben von Benutzerdaten (601) umfasst, wenn mindestens eine der Datenschutzrichtlinien des Dienstleistersystems (12) dem festlegten Striktheitsgrad der mindestens einen Nutzungsrichtlinien des Benutzers (18) entspricht.

8. Ein Verfahren gemäß irgendeinem der Ansprüche 5 bis 7, das ferner den Schritt von Anzeigen, durch den Vermittler (24), des Striktheitsgrads der mindestens einen der Nutzungsrichtlinien des Benutzers (18) dem Dienstleistersystem (12) umfasst, wenn die mindestens eine der Datenschutzrichtlinien des Dienstleistersystems (12) nicht dem festlegten Striktheitsgrad der mindestens einen der Nutzungsrichtlinien des Benutzers (18) entspricht.

9. Ein Verfahren gemäß irgendeinem der Ansprüche 5 bis 8, das ferner den Schritt von dem Benutzer (18) Gestatten umfasst, eine Nutzungsrichtlinie-Anforderung herabzusetzen, wenn die mindestens eine der Datenschutzrichtlinien des Dienstleistersystems (12) nicht dem festlegten Striktheitsgrad der mindestens einen der Nutzungsrichtlinien des Benutzers entspricht.

10. Ein Verfahren gemäß irgendeinem der vorstehenden Ansprüche, das ferner den Schritt von Anfügen einer elektronisch signierten Nutzungsrichtlinie an die Daten, wenn die Daten freigegeben werden.

11. Ein Datenübertragungssystem, umfassend:
ein Dienstleistersystem (12), das eine Datenschutzrichtlinie aufweist; und
einen Vermittler (24), der eine Nutzungsrichtlinie (604) für die Beschränkungen in Bezug auf Daten (601) eines Benutzers (18) vorhält, der zum Überprüfen einer Anfrage von dem Dienstleistersystem (12) hinsichtlich der Nutzungsrichtlinie (640) des Benutzers (18) und zum Entscheiden, ob die Daten (601), die dem Benutzer (18) zugeordnet sind, in Antwort auf die Anfrage freigegeben werden können, eingerichtet ist; wobei das System umfasst, dass die Anfrage Informationen bezüglich der Datenschutzrichtlinie einschließt und der Vermittler (24) zum Überprüfen der Anfrage hinsichtlich der Nutzungsrichtlinie (604) durch Korrelieren der Informationen bezüglich der Datenschutzrichtlinie mit der Nutzungsrichtline (604) eingerichtet ist.

12. Ein Datenübertragungssystem, umfassend:
Bekanntmachungsmittel zum Bekanntmachen, bei einem Vermittler (24), einer Nutzungsrichtlinie (604) für Beschränkungen in Bezug auf Daten (601) eines Benutzers (18);
Empfangsmittel zum Empfangen einer Anfrage nach Daten, die dem Benutzer (18) zugeordnet sind, von einem Dienstleistersystem (12) an den Vermittler (24);
Überprüfungsmittel zum Überprüfen, in dem Vermittler (24), der Anfrage hinsichtlich einer Nutzungsrichtlinie (604) des Benutzers (18); und
Entscheidungsmittel zum Entscheiden, ob die Daten (601) freigegeben werden können;
wobei das System umfasst, dass die Anfrage Informationen bezüglich einer Datenschutzrichtlinie des Dienstleistersystems (18) einschließt und die Überprüfungsmittel die Anfrage hinsichtlich der Nutzungsrichtlinie (604) durch Korrelieren der Information bezüglich der Datenschutzrichtlinie mit der Nutzungsrichtlinie (604) überprüft.

## Revendications

1. Procédé pour contrôler le transfert de données entre un système de fournisseur de services (12) et un utilisateur (18) dans un système de communication (10) où le système de fournisseur de services (12) possède une politique de confidentialité, le procédé étant **caractérisé par** :
la présentation (1) à un courtier (24) d'une politique d'utilisation (604) pour des contraintes liées à des données (601) d'un utilisateur (18) ;
la réception (2) d'une demande de données (601) associées à l'utilisateur (18) en provenance d'un système de fournisseur de services (12) au courtier (24) ;
la vérification (3), dans le courtier (24), de la demande par rapport à la politique d'utilisation (604) de l'utilisateur (18), et
le fait de décider (4) si les données (601) peuvent être publiées ;
le procédé spécifiant en outre que la demande comprend des informations liées à la politique de confidentialité et que l'étape de vérification de la demande par rapport à la politique d'utilisation (604) comprend la mise en corrélation des informations liées à la politique de confidentialité avec la politique d'utilisation (604).

2. Procédé selon la revendication 1, comprenant en outre l'étape consistant à utiliser l'utilisateur (18) pour définir la politique d'utilisation (604) pour les contraintes liées aux données (601).

3. Procédé selon la revendication 1 ou 2, comprenant en outre l'étape consistant à fournir un ensemble prédéfini de politiques de confidentialité et de politiques d'utilisation.

4. Procédé selon la revendication 3, dans lequel l'étape de fourniture comprend la fourniture des politiques de confidentialité et des politiques d'utilisation comprenant des éléments d'information similaires.

5. Procédé selon la revendication 3, dans lequel l'étape de fourniture comprend la fourniture d'au moins une des politiques de confidentialité et d'au moins une des politiques d'utilisation qui spécifient un niveau de restriction décrivant les contraintes liées aux données.

6. Procédé selon l'une quelconque des revendications 3 à 5, comprenant en outre l'étape consistant à utiliser l'utilisateur (18) pour choisir les politiques d'utilisation (604) pour les contraintes liées aux données (601).

7. Procédé selon la revendication 5 ou 6, comprenant en outre l'étape consistant à publier des données d'utilisateur (601) si la au moins une des politiques de confidentialité du système de fournisseur de services (12) correspond au niveau de restriction spécifié de la au moins une des politiques d'utilisation de l'utilisateur (18).

8. Procédé selon l'une quelconque des revendications 5 à 7, comprenant en outre l'étape consistant à indiquer, par le courtier (24), le niveau de restriction de la au moins une des politiques d'utilisation de l'utilisateur (18) au système de fournisseur de services (12) si la au moins une des politiques de confidentialité du système de fournisseur de services (12) ne correspond pas au niveau de restriction spécifié de la au moins une des politiques d'utilisation de l'utilisateur (18).

9. Procédé selon l'une quelconque des revendications 5 à 8, comprenant en outre l'étape consistant à autoriser l'utilisateur (18) à réduire une exigence de politique d'utilisation si la au moins une des politiques de confidentialité du système de fournisseur de services (12) ne correspond pas au niveau de restriction spécifié de la au moins une des politiques d'utilisation de l'utilisateur.

10. Procédé selon l'une quelconque des revendications précédentes, comprenant en outre l'étape consistant à joindre une politique d'utilisation signée électroniquement aux données lorsque les données sont publiées.

11. Système de transfert de données comprenant :
un système de fournisseur de services (12) possédant une politique de confidentialité ; et
un courtier (24) hébergeant une politique d'utilisation (604) pour des contraintes liées aux données (601) d'un utilisateur (18), configuré pour vérifier une demande en provenance du système de fournisseur de services (12) par rapport à la politique d'utilisation (604) de l'utilisateur (18) et pour décider si des données (601) associées à l'utilisateur (18) peuvent être publiées en réponse à la demande ; le système comprenant le fait que la demande comprend des informations liées à la politique de confidentialité et que le courtier (24) est configuré pour vérifier la demande par rapport à la politique d'utilisation (604) en mettant en corrélation les informations liées à la politique de confidentialité avec la politique d'utilisation (604).

12. Système de transfert de données comprenant :
des moyens de présentation pour présenter à un courtier (24) une politique d'utilisation (604) pour des contraintes liées à des données (601) d'un utilisateur (18) ;
des moyens de réception pour recevoir une demande de données associées à l'utilisateur (18) en provenance d'un système de fournisseur de services (12) au courtier (24) ;
des moyens de vérification pour vérifier, dans le courtier (24), la demande par rapport à une politique d'utilisation (604) de l'utilisateur (18), et
des moyens de décision pour décider si les données peuvent être publiées ; le système comprenant le fait que la demande comprend des informations liées à une politique de confidentialité du système de fournisseur de services (18) et que les moyens de vérification vérifient la demande par rapport à la politique d'utilisation (604) en mettant en corrélation les informations liées à la politique de confidentialité avec la politique d'utilisation (604).
